# EUROPÄISCHE PATENTANMELDUNG

(11) **EP 1 477 520 A2**
(43) Veröffentlichungstag der Anmeldung: **17.11.2004**
(21) Anmeldenummer: 04010540.5
(22) Anmeldetag: 04.05.2004
(51) Int. Cl.: C08K 5/51, C08K 5/02

(54) **Halogenhaltige Flammschutzmittel-Kombination**

(30) Priorität: 13.05.2003 DE 10321298
(71) Anmelder: Clariant GmbH, 65929 Frankfurt am Main (DE)
(72) Erfinder: Hörold, Sebastian, Dr., 86420 Diedorf (DE); Knop, Susanne, Dr., 22455 Hamburg (DE); Sicken, Martin, Dr., 51149 Köln (DE)
(74) Vertreter: Paczkowski, Marcus, Dr.

(57) **Zusammenfassung**

Die Erfindung betrifft eine Flammschutzmittel-Kombination, enthaltend als Komponente A mindestens ein Phosphinsäuresalz der Formel (I) und/oder ein Diphosphinsäuresalz der Formel (II) und/oder deren Polymere enthält, 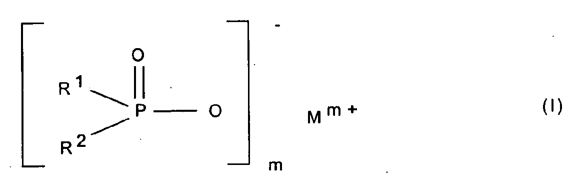 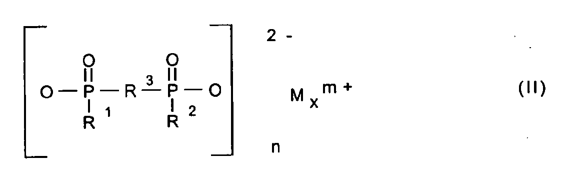 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na; K und/oder eine protonierte Stickstoffbase;
- m: 1 bis 4;
- n: 1 bis 4;
- x: 1 bis 4
bedeuten, und als Komponente B mindestens eine synergistisch wirkende halogenhaltige Verbindung.

## Beschreibung

Die vorliegende Erfindung betrifft eine Flammschutzmittel-Kombination und ihre Verwendung.

Salze von Phosphinsäuren (Phosphinate) haben sich als wirksame flammhemmende Zusätze für thermoplastische Polymere erwiesen (DE-A-2 252 258 und DE-A-2 447 727). Calcium- und Aluminiumphosphinate sind in Polyestern als besonders effektiv beschrieben worden und beeinträchtigen die Materialeigenschaften der Polymerformmassen weniger als beispielsweise die Alkalimetallsalze (EP-A-0 699 708).

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (EP-A-0 892 829 sowie DE-A-197 34 437 und DE-A-197 37 727).

Unter anderem wurden Melamin und Melaminverbindungen als wirksame Synergisten beschrieben, beispielsweise Melamincyanurat und Melaminphosphat, die selbst auch eine gewisse Flammschutzwirkung in bestimmten Thermoplasten haben, in Kombination mit Phosphinaten aber deutlich wirksamer sind.

Auch höhermolekulare Derivate des Melamins wie die Kondensationsprodukte Melam, Melem und Melon sowie entsprechende Umsetzungsprodukte dieser Verbindungen mit Phosphorsäure wie Dimelaminpyrophosphat und Melaminpolyphosphate sind als Flammschutzmittel beschrieben worden. Die benötigten Zugabemengen in thermoplastischen Kunststoffen sind jedoch relativ hoch, insbesondere bei glasfaserverstärkten Materialien.

Trotzdem ist die Wirkung der Kombinationen in einzelnen Kunststoffen noch nicht zufriedenstellend. Während Brandprüfungen wie die UL 94 V-0 mit relativ geringen Zugabemengen erreicht werden können, so gibt es andere Klassifizierungen flammwidriger Werkstoffe, die nicht oder nur mit sehr hohen Zugabemengen erreicht werden können. Dazu gehören z.B. die Glühdrahtprüfung nach IEC 60695.

Es ist daher Aufgabe der vorliegenden Erfindung, Flammschutzmittel-Kombinationen zur Verfügung zu stellen, die bereits in geringen Mengen in den entsprechenden Kunststoffen, insbesondere in thermoplastischen Polymeren, eine ausgezeichnete Flammschutzwirkung für verschiedene Brandklassen zeigen. Insbesondere sollten durch die erfindungsgemäße Flammschutzmittel-Kombination Kunststoffe zur Verfügung gestellt werden, die neben einer UL 94 V-0 Einstufung auch die Glühdrahtprüfung bei Temperaturen oberhalb 750°C bestehen.

Gelöst wird diese Aufgabe durch eine Flammschutzmittel-Kombination, enthaltend Komponente A mindestens ein Phosphinsäuresalz der Formel (I) und/oder ein Diphosphinsäuresalz der Formel (II) und/oder deren Polymere, 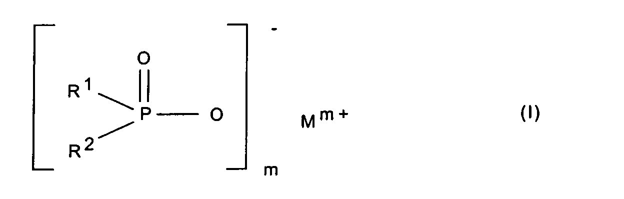 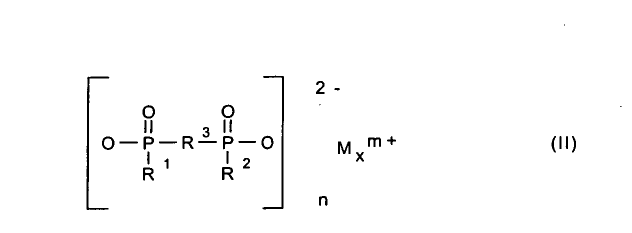 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder - Aryl-alkylen;
- M: Mg, Ca, Al, Sb, Sn, Ge, Ti, Zn, Fe, Zr, Ce, Bi, Sr, Mn, Li, Na; K und/oder eine protonierte Stickstoffbase;
- m: 1 bis 4;
- n: 1 bis 4;
- x: 1 bis 4
bedeuten, und als Komponente B mindestens eine synergistisch wirkende halogenhaltige Verbindung.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Bevorzugt sind R¹, R² gleich oder verschieden sind und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ Phenylen oder Naphthylen.

Bevorzugt bedeutet R³ Methyl-phenylen, Ethyl-phenylen, tert.-Butylphenylen, Methyl-naphthylen, Ethyl-naphthylen oder tert.-Butylnaphthylen.

Bevorzugt bedeutet R³ Phenyl-methylen, Phenyl-ethylen, Phenyl-propylen oder Phenyl-butylen.

Bevorzugt handelt es sich bei der halogenhaltigen Komponente B um brom- oder chlorhaltige Säure- bzw. Alkoholkomponenten oder um brom- oder chlorhaltige aromatische oder aliphatische Verbindungen.

Bevorzugt handelt es sich bei den brom- oder chlorhaltigen Säure- bzw. Alkoholkomponenten um Hexachloroendomethylentetrahydrophthalsäure, Tetrabromphthalsäure, Tetrabromphthalsäureanhydrid, Dibromneopentylglycol, Trischlorethylphosphat und/oder Trischlorpropylphosphat.

Bevorzugt handelt es sich bei den brom- oder chlorhaltigen aromatischen und aliphatischen Verbindungen um bromierte Polystyrole, Polybrombenzylacrylate, Tetrabrombisphenol A und Derivate, polybromierte Diphenylether, Ethylen-bistetrabromophthalimid, bromierte Epoxyoligomere, polybromierte Diphenylethane, Hexabromcyclododecan, Chlorparaffine und/oder Dodecachlorpentacyclooctadecadien.

Bevorzugt enthält die erfindungsgemäße Flammschutzmittel-Kombination als weitere Komponente C eine Stickstoff-, Phosphor- oder Phosphor-Stickstoff-Verbindung.

Bevorzugt handelt es sich bei der Komponente C um Melaminphosphat, Dimelaminphosphat, Melaminpyrophosphat, Melaminpolyphosphate, Melampolyphosphate, Melempolyphosphate und/oder Melonpolyphosphate.

Bevorzugt enthält die erfindungsgemäße Flammschutzmittel-Kombination als weitere Komponente C mindestens eine Stickstoffverbindung.

Bevorzugt handelt es sich bei den Stickstoffverbindungen um solche der Formeln (III) bis (VIII) oder Gemische davon 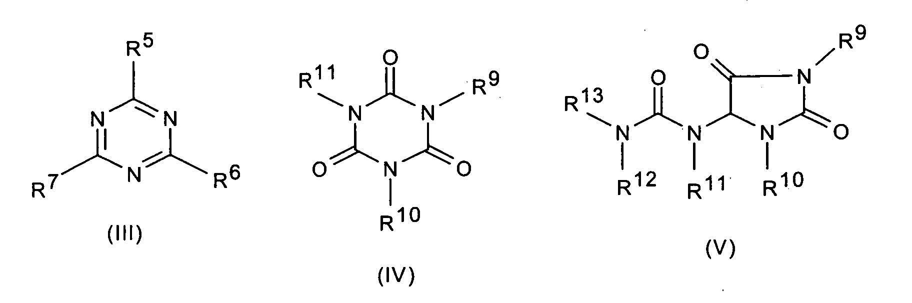 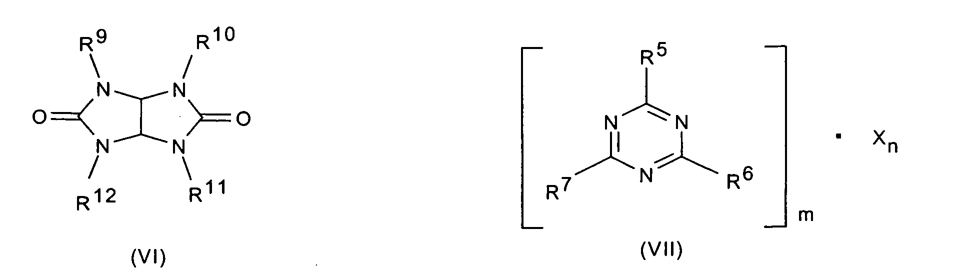 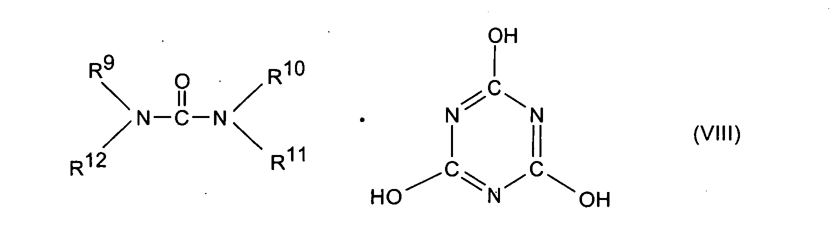 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und - N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten.

Bevorzugt enthält die erfindungsgemäße Flammschutzmittel-Kombination als Komponente C oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide.

Bevorzugt enthält die erfindungsgemäße Flammschutzmittel-Kombination als Komponente C stickstoffhaltige Phosphate der Formeln (NH₄)_{y} H_{3-y} PO₄ bzw. (NH₄ PO₃)_{z}, mit y gleich 1 bis 3 und z gleich 1 bis 10.000. Bevorzugt enthält die erfindungsgemäße Flammschutzmittel-Kombination als Komponente D eine synthetische anorganische Verbindung und/oder ein mineralisches Produkt:

Bevorzugt handelt es sich bei der Komponente D um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Bevorzugt handelt sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat.

Bevorzugt enthält die erfindungsgemäße Flammschutzmittel-Kombination 0,1 bis 99,9 Gew.-% Komponente A und 0,1 bis 99,9 Gew.-% Komponente B.

Bevorzugt enthält die erfindungsgemäße Flammschutzmittel-Kombination 10 bis 70 Gew.-% Komponente A, 10 bis 70 Gew.-% Komponente B und 0 bis 60 Gew.-% Komponente C.

Bevorzugt enthält die erfindungsgemäße Flammschutzmittel-Kombination 20 bis 65 Gew.-% Komponente A, 15 bis 65 Gew.-% Komponente B, 0 bis 60 Gew.-% Komponente C und 0 bis 20 Gew.-% Komponente D.

Bevorzugt enthält die erfindungsgemäße Flammschutzmittel-Kombination 30 bis 60 Gew.-% Komponente A, 30 bis 50 Gew.-% Komponente B, 0 bis 50 Gew.-% Komponente C und 0 bis 5 Gew.-% Komponente D.

Bevorzugt enthält die erfindungsgemäße Flammschutzmittel-Kombination 30 bis 60 Gew.-% Komponente A, 30 bis 50 Gew.-% Komponente B, 0 bis 40 Gew.-% Komponente C und 0 bis 2 Gew.-% Komponente D.

Die Erfindung betrifft auch die Verwendung der erfindungsgemäßen FlammschutzmittelKombination zur flammfesten Ausrüstung von thermoplastischen Polymeren.

Bevorzugt handelt es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol).

Besonders bevorzugt handelt es sich bei den thermoplastischen Polymeren um Polyamid, Polyester und ABS.

Bevorzugt wird bei der Verwendung der erfindungsgemäßen Flammschutzmittel-Kombination unabhängig voneinander die Komponente A in einer Konzentration von 0,1 bis 30 Gew.-% und die Komponente B in einer Konzentration von 0,1 bis 30 Gew.-%, jeweils bezogen auf die Kunststoff-Formmasse, eingesetzt wird. Die Komponente C wird bevorzugt in 0 bis 5 Gew.-% und die Komponente D in 0 bis 30 Gew.-% eingesetzt.

Bevorzugt wird bei der Verwendung der erfindungsgemäßen Flammschutzmittel-Kombination unabhängig voneinander die Komponente A in einer Konzentration von 3 bis 40 Gew.-%, die Komponente B in einer Konzentration von 1 bis 25 Gew.-%, die Komponente C in einer Konzentration von 3 bis 20 Gew.-% und die Komponente D in einer Konzentration von 0 bis 5 Gew.-%, jeweils bezogen auf die Kunststoff-Formmasse, eingesetzt.

Bevorzugt wird bei der Verwendung der erfindungsgemäßen Flammschutzmittel-Kombination unabhängig voneinander die Komponente A in einer Konzentration von 5 bis 30 Gew.-%, die Komponente B in einer Konzentration von 2 bis 15 Gew.-%, die Komponente C in einer Konzentration von 4 bis 15 Gew.-% und die Komponente D in einer Konzentration von 0 bis 2 Gew.-%, jeweils bezogen auf die Kunststoff-Formmasse, eingesetzt.

Die thermoplastischen Polymere, in denen die erfindungsgemäßen Flammschutzmittel-Kombinationen wirksam eingesetzt werden können, sind in der internationalen Patentanmeldung WO 97/39053 beschrieben.

### Hierzu gehören:

Polymere von Mono- und Diolefinen, beispielsweise Polypropylen, Polyisobutylen, Polybutylen, Polybuten-1, Polyisopropren oder Polybutadien sowie Polymerisate von Cycloolefinen wie etwa von Cyclopenten oder von Norbornen; ferner Polyethylen, welches gegebenefalls vernetzt sein kann; z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).

Mischungen der vorgenannten Polymere, beispielsweise Mischungen von Polypropylen mit Polyisobutylen, Polypropylen mit Polyethylen (z.B: PP/HDPE, PP/LDP) und Mischungen verschiedener Polyethylentypen wie etwa LDPE/HDPE.

Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere etc. Ferner Ethylen-Alkylacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit anderen Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere, und alternierend oder statistisch aufgebaute Polyalkylen/Kohlenstoffmonoxid-Copolymere und deren Mischungen mit anderen Polymeren wie z.B. Polyamiden.

Polystyrol, Poly(p-methylstyrol), Poly-(α-methylstyrol).

Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methycrylat; Mischungen von hoher Schlagzähigkeit aus Styrol-Copolymeren und einem anderen Polymer, wie z.B. einem Polyacrylat, einem Dien-polymeren oder einem Ethylen-Propylen-Dien-Terpolymeren; sowie Blockcopolymere des Styrols wie z.B. Styrol-Butadien-Styrol, Styrol-Isopren-Styrol, Styrol-Ethylen/Butylen-Styrol oder Styrol-Ethylen/Propylen-Styrol.

Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (oder Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien, Styrol und Maleinsäureimid auf Polybutadien; Styrol und Alkylacrylate bzw. Alkylmethacrylate auf Polybutadien; Styrol und Acrylnitril auf Ethylen-Propylen-Dien-Terpolymeren; Styrol und Acrylnitril auf Polyalkylacrylaten oder Polyalkylmethacrylaten; Styrol und Acrylnitril auf Acrylat-Butadien-Copolymere, sowie deren Mischungen mit anderen genannten Polymeren, wie sie z.B. als sogenannte ABS-, MBS-, ASA- oder AES-Polymere bekannt sind.

Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Polymere, die sich von α,β-ungesättigten Säuren und deren Derivaten ableiten, wie Polyacrylate und Polymethacrylate, mit Butylacrylate schlagzäh modifizierte Polymethylmethacrylate, Polyacrylamide und Polyacrylnitrile.

Copolymere der vorgenannten Monomere untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Polymere, die sich von ungesättigten Alkoholen und Aminen bzw. deren Acylderivaten oder Acetalen ableiten, wie Polyvinylalkohol, Polyvinylacetat, -stearat, - benzoat, -maleat, Polyvinylbutyral, Polyallylphthalat, Polyallylmelamin; sowie deren Copolymere mit anderen genannten Olefinen.

Polyacetale, wie Polyoxymethylen, sowie solche Polyoxymethylene, die Comonomere, wie z.B. Ethylenoxid enthalten; Polyacetale, die mit thermoplastischen Polyurethanen, Acrylaten oder MBS modifiziert sind.

Polyphenylenoxide und -sulfide und deren Mischungen mit Styrolpolymeren oder Polyamiden.

Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide hergestellt aus Hexamethylendiamin und Iso- und/oder Terephthalsäure und gegebenenfalls einem Elastomer als Modifikator, z.B. Poly-2,4,4-trimethylhexamethylen-terephthalamid oder Poly-m-phenylen-isophthal-amid. BlockCopolymere der vorgenannten Polyamide mit Polyolefinen, Olefin-Copolymeren, lonomeren, oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("IM-Polyamidsysteme").

Polyharnstoffe, Polyimide, Polyamidimide, Polyetherimide, Polyesterimide, Polyhydantoine und Polybenzimidazole.

Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Polycarbonate und Polyestercarbonate.

Polysulfone, Polyethersulfone und Polyetherketone.

Mischungen (Polyblends) der vorgenannten Polymere, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere.

Im folgenden umfasst der Begriff "Phosphinsäuresalz" Salze der Phosphin- und Diphosphinsäuren und deren Polymere.

Die Phosphinsäuresalze, die in wässrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethyl-methylphosphinsäure, Diethylphosphinsäure, Methyln-propyl-phosphinsäure, Methan-di(methylphosphinsäure), Benzol-1,4-(dimethylphosphinsäure), Methyl-phenyl-phosphinsäure und Diphenylphosphinsäure.

Die Salze der Phosphinsäuren gemäß der Erfindung können nach bekannten Methoden hergestellt werden, wie sie beispielsweise in der EP-A-0 699 708 näher beschrieben sind: Die Phosphinsäuren werden dabei beispielsweise in wässriger Lösung mit Metallcarbonaten, Metallhydroxiden oder Metalloxiden umgesetzt.

Die Menge des den Polymeren zuzusetzenden Phosphinsäuresalzes kann innerhalb weiter Grenzen variieren. Im allgemeinen verwendet man 1 bis 50 Gew.-%, bezogen auf die Kunststoff-Formmasse. Die optimale Menge hängt von der Natur des Polymeren und der Art der Komponenten B und vom Typ des eingesetzten Phosphinsäuresalzes selbst ab. Bevorzugt sind 3 bis 40 Gew.-%, insbesondere 5 bis 30 Gew.-%, bezogen auf die Kunststoff-Formmasse.

Die vorgenannten Phosphinsäuresalze können für die erfindungsgemäße Flammschutzmittel-Kombination je nach Art des verwendeten Polymeren und der gewünschten Eigenschaften in verschiedener physikalischer Form angewendet werden. So können die Phosphinsäuresalze beispielsweise zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze, wie sie gemäß der Erfindung in der Flammschutzmittel-Kombination eingesetzt werden, sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für thermoplastische Polymere nicht flüchtig.

Die flammhemmenden Komponenten A und B sowie gegebenenfalls C und D können in thermoplastische Polymere eingearbeitet werden, indem etwa alle Bestandteile als Pulver und/oder Granulat in einem Mischer vorgemischt und anschließend in einem Compoundieraggregat (z.B. einem Doppelschneckenextruder) in der Polymerschmelze homogenisiert werden. Die Schmelze wird üblicherweise als Strang abgezogen, gekühlt und granuliert. Die Komponenten A und B sowie gegebenenfalls C und D können auch separat über eine Dosieranlage direkt in das Compoundieraggregat eingebracht werden.

Es ist ebenso möglich, die flammhemmenden Komponenten A und B sowie gegebenenfalls C und D einem fertigen Polymergranulat bzw. -pulver beizumischen und die Mischung direkt auf einer Spritzgussmaschine zu Formteilen zu verarbeiten. Bei Polyestern beispielsweise können die flammhemmenden Zusätze A und B sowie gegebenenfalls C und D auch bereits während der Polykondensation in die Polyestermasse gegeben werden.

Den Formmassen können neben der erfindungsgemäßen flammhemmenden Kombination aus A und B sowie gegebenenfalls C und D auch Füll- und Verstärkungsstoffe wie Glasfasern, Glaskugeln oder Mineralien wie Kreide zugesetzt werden. Zusätzlich können die Formmassen noch andere Zusätze wie Antioxidantien, Lichtschutzmittel, Gleitmittel, Farbmittel, Nukleierungsmittel oder Antistatika enthalten. Beispiele für die verwendbaren Zusätze sind in EP-A-0 584 567 angegeben.

Die flammwidrigen Kunststoff-Formmassen eignen sich zur Herstellung von Formkörpern, Filmen, Fäden und Fasern, beispielsweise durch Spritzgießen, Extrudieren oder Verpressen.

Thermoplastische Polymere, die die erfindungsgemäßen Flammschutzmittel-Kombinationen und gegebenenfalls Füll- und Verstärkungsstoffe und/oder andere Zusätze, wie unten definiert, enthalten, werden im folgenden als Kunststoff-Formmassen bezeichnet.

Der Brandschutz elektrischer und elektronischer Ausrüstungen ist in Vorschriften und Normen zur Produktsicherheit festgelegt. In den USA werden brandschutztechnische Prüf- und Zulassungsverfahren von Underwriters Laboratories (UL) durchgeführt. Die UL Vorschriften werden heute weltweit akzeptiert. Die Brandprüfungen für Kunststoffe wurden entwickelt, um den Widerstand der Materialien gegenüber Entzündung und Flammenausbreitung zu ermitteln.

Je nach Brandschutzanforderungen müssen die Materialien horizontale Brenntests (Klasse UL 94 HB oder die strengeren vertikalen Tests (UL 94 V2, V1 oder V-0) bestehen. Diese Prüfungen simulieren Zündquellen geringer Energie, die in Elektrogeräten auftreten und auf Kunststoffteile elektrischer Baugruppen einwirken können.

### Beispiele

### 1. Eingesetzte Komponenten

### Handelsübliche Polymere (Granulate):

| | |
|---|---|
| Polyamid 6.6 (PA 6.6-GV) | ®Durethan AKV 30 (Fa. Bayer AG, D) enthält 30 % Glasfasern. |
| Polybutylenterephthalat (PBT-GV) | ®Celanex 2300 GV1/30 (Fa. Ticona, D) enthält 30 % Glasfasern. |

Flammschutzmittelkomponenten (pulverförmig):

Aluminiumsalz der Diethylphosphinsäure, im folgenden als DEPAL bezeichnet.

®Melapur 200 (Melaminpolyphosphat), im folgenden als MPP bezeichnet, Fa. DSM Melapur, NL

®Saytex 7010, bromiertes Polystyrol, im folgenden als Br-PS bezeichnet, Fa. Albemarle, Louvain-la-Neuve, Belgien

FR-1025, Polypentabromobenzylacrylat, im folgenden als PBBA bezeichnet, Dead Sea Bromine Group, Beer Sheva, Israel

### 2. Herstellung, Verarbeitung und Prüfung von flammhemmenden Kunststoff-Formmassen

Die Polymere wurden auf einem Doppelschnecken-Extruder (Typ Berstorff ZE 25/40) bei Temperaturen von 260 bis 310°C (PA 6.6-GV) bzw. von 240 bis 280°C (PBT-GV) verarbeitet. Der homogenisierte Polymerstrang wurde abgezogen, im Wasserbad gekühlt und anschließend granuliert.
Die Flammschutzmittelkomponenten wurden in dem in den Tabellen angegebenen Verhältnis miteinander vermischt und über einen Seiteneinzug der Polymerschmelze zugegeben.

Nach ausreichender Trocknung wurden die Formmassen auf einer Spritzgießmaschine (Typ Arburg 320 C Allrounder) bei Massetemperaturen von 270 bis 320°C (PA 6.6-GV) bzw. von 260 bis 280°C (PBT-GV) zu Prüfkörpern verarbeitet und anhand des UL 94-Tests (Underwriter Laboratories) und der Glühdrahtprüfung nach IEC 60695-2 auf Flammwidrigkeit geprüft und klassifiziert.

Die Fließfähigkeit der Formmassen wurde durch Ermittlung des Schmelzvolumenindex (MVR) bei 275°C/2,16 kg bestimmt. Ein starker Anstieg des MVR-Wertes deutet auf einen Polymerabbau hin.

Die Verarbeitungseigenschaften in Polyester wurden anhand der Spezifischen Viskosität (SV) beurteilt. Aus dem Granulat der Kunststoff-Formmasse wurde nach ausreichender Trocknung eine 1,0 %ige Lösung in Dichloressigsäure hergestellt und der SV-Wert bestimmt. Je höher der SV-Wert ist, desto geringer war der Polymerabbau während der Einarbeitung des Flammschutzmittels.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Tabellen 1 und 3 zeigen Vergleichsbeispiele, in denen eine Flammschutzmittel-Kombination, basierend auf dem Aluminiumsalz der Diethylphosphinsäure (DEPAL) und dem stickstoffhaltigen Synergisten Melaminpolyphosphat (MPP) sowie der Bromflammschutzmittel Brompolystyrol (Br-PS) und Polypentabrombenzylacrylat (PBBA) allein verwendet wurden.

Die Ergebnisse der Beispiele, in denen die Flammschutzmittel-Mischung gemäß der Erfindung eingesetzt wurden, sind in den Tabellen 2 und 4 aufgelistet. Alle Mengen sind als Gew.-% angegeben und beziehen sich auf die Kunststoff-Formmasse einschließlich der Flammschutzmittel-Kombination und Zusatzstoffen.

Aus den Beispielen geht hervor, dass die erfindungsgemäßen Zusätze (Mischung aus den Komponenten Phosphinat, Brom-Flammschutzmittel und ggf. Stickstoffsynergist die Flammschutzwirkung verbessern.

Durch die Verwendung von Phosphinat und ggf. Stickstoffsynergist sowie Bromflammschutzmittel allein kann nur eine Glühdrahtentzündungstemperatur (GWIT nach IEC 60695-1-13) von 700°C erreicht werden.

Wird nun eine erfindungsgemäße Flammschutzmittel-Mischung aus Phosphinat, Brom-Flammschutzmittel und ggf. Stickstoffsynergist (Beispiele 8 bis 11 und 18 bis 21) eingesetzt, wird jetzt eine Glühdrahtentzündungstemperatur von über 800°C beobachtet.

In PBT beträgt die Glühdrahtentzündungstemperatur ähnlich wie bei Polyamid nur maximal 700°C, wenn Phosphinat und ggf. Stickstoffsynergist und Brom-Flammschutzmittel allein eingesetzt werden.

Bei Anwendung der erfindungsgemäßen Kombination von Phosphinat, ggf. Stickstoffsynergist und Brom-Flammschutzmittel wird eine Glühdrahtentzündungstemperatur von über 800°C beobachtet.

Soweit nicht anders Angegeben, handelt es sich bei Mengenangaben immer um Gew.-%.

**Tabelle 1:**

| Vergleichsbeispiele (Versuchsreihe 1): Flammschutz-Formmassen mit den Komponenten als einzelne Additive in glasfaserverstärktem PA 6.6. | | | | | |
|---|---|---|---|---|---|
| Vergleichsbeispiele | DEPAL [%] | MPP [%] | Br-PS [%] | Klasse nach UL 94 (0,8 mm) | GWIT / IEC 60695-2-13 [°C] |
| 1 | 0 | 0 | 0 | n.k.^{*)} | 550 |
| 2 | 10 | 5 | 0 | V-0 | 700 |
| 3 | 0 | 10 | 0 | n.k. | 650 |
| 4 | 10 | 0 | 0 | V-2 | 650 |
| 5 | 0 | 0 | 10 | n.k. | 550 |
| 6 | 0 | 0 | 20 | n.k. | 550 |
| 7 | 0 | 0 | 30 | V-2 | 700 |

| | | | | | |
|---|---|---|---|---|---|
| ^{*)}n.k. = nicht klassifizierbar | | | | | |

**Tabelle 2:**

| Erfindungsgemäße Beispiele: Flammschutz-Formmassen mit der Kombination von Depal mit Stickstoffsynergist und Brom-Flammschutzmittel in glasfaserverstärktem PA 6.6. | | | | | |
|---|---|---|---|---|---|
| Beispiele (Erfindung) | DEPAL [%] | MPP [%] | Br-PS [%] | Klasse nach UL 94 (0,8 mm) | GWIT / IEC 60695-2-13 [°C] |
| 8 | 10 | 0 | 10 | V-0 | 850 |
| 9 | 10 | 5 | 5 | V-0 | 800 |
| 10 | 8 | 4 | 8 | V-0 | 800 |
| 11 | 5 | 5 | 5 | V-0 | 800 |

**Tabelle 3:**

| Vergleichsbeispiele: Flammschutz-Formmassen mit den Komponenten als einzelne Additive in glasfaserverstärktem PBT | | | | | |
|---|---|---|---|---|---|
| Vergleichsbeispiele | DEPAL [%] | MPP [%] | PBBA [%] | Klasse nach UL 94 (0,8 mm) | GWIT / IEC 60695-2-13 [°C] |
| 12 | 0 | 0 | 0 | n.k.^{**)} | 550 |
| 13 | 10 | 5 | 0 | V-0 | 700 |
| 14 | 0 | 10 | 0 | n.k. | 650 |
| 15 | 10 | 0 | 0 | V-2 | 650 |
| 16 | 0 | 0 | 10 | n.k. | 550 |
| 17 | 0 | 0 | 20 | n.k. | 650 |

| | | | | | |
|---|---|---|---|---|---|
| **) n.k. = nicht klassifizierbar | | | | | |

**Tabelle 4:**

| Erfindungsgemäße Beispiele: Flammschutz-Formmassen mit der Kombination von Depal mit Stickstoffsynergist und Brom-Flammschutzmittel in glasfaserverstärktem PBT | | | | | |
|---|---|---|---|---|---|
| Beispiele (Erfindung) | DEPAL [%] | MPP [%] | PBBA [%] | Klasse nach UL 94 (0,8 mm) | GWIT/IEC 60695-2-13 [°C] |
| 18 | 10 | 0 | 10 | V-0 | 850 |
| 19 | 10 | 5 | 5 | V-0 | 800 |
| 20 | 8 | 4 | 4 | V-0 | 800 |
| 21 | 5 | 5 | 5 | V-1 | 800 |

## Patentansprüche

1. Flammschutzmittel-Kombination, enthaltend als Komponente A mindestens ein Phosphinsäuresalz der Formel (I) und/oder ein Diphosphinsäuresalz der Formel (II) und/oder deren Polymere 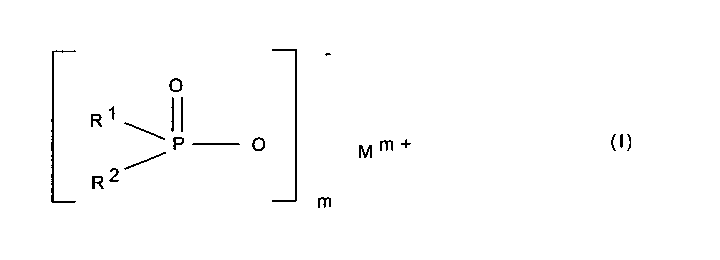 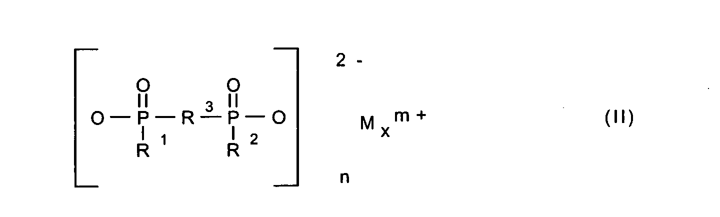 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder - Aryl-alkylen;
M Mg, Ca, Al, Sb, Sn, Ge, Ti, Zn, Fe, Zr, Ce, Bi, Sr, Mn, Li, Na; K und/oder eine protonierte Stickstoffbase;
m 1 bis 4;
n 1 bis 4;
x 1 bis 4
bedeuten, und als Komponente B mindestens eine synergistisch wirkende halogenhaltige Verbindung.

2. Flammschutzmittel-Kombination nach Anspruch 1, **dadurch gekennzeichnet, dass** R¹, R² gleich oder verschieden sind und C₁-C₆-Alkyl, linear oder verzweigt und/oder Phenyl bedeuten.

3. Flammschutzmittel-Kombination nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Flammschutzmittel-Kombination nach einem oder mehreren der Ansprüche 1 bis 3, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

5. Flammschutzmittel-Kombination nach einem oder mehreren der Ansprüche 1 bis 4, **dadurch gekennzeichnet, dass** es sich bei der halogenhaltigen Komponente B um brom- oder chlorhaltige Säure- oder Alkoholkomponenten oder um brom- oder chlorhaltige aromatische oder aliphatische Verbindungen handelt.

6. Flammschutzmittel-Kombination nach Anspruch 5, **dadurch gekennzeichnet, dass** es sich bei den brom- oder chlorhaltigen Säure- oder Alkoholkomponenten um Hexachloroendomethylentetrahydrophthalsäure, Tetrabromphthalsäure, Tetrabromphthalsäureanhydrid, Dibromneopentylglycol, Trischlorethylphosphat und/oder Trischlorpropylphosphat handelt.

7. Flammschutzmittel-Kombination nach Anspruch 5, **dadurch gekennzeichnet, dass** es sich bei den brom- oder chlorhaltigen, aliphatischen oder aromatischen Verbindungen um bromierte Polystyrole, Polybrombenzylacrylate, Tetrabrombisphenol A und Derivate, polybromierte Diphenylether, Ethylen-bistetrabromophthalimid, bromierte Epoxyoligomere, polybromierte Diphenylethane, Hexabromcyclododecan, Chlorparaffine und/oder Dodecachlorpentacyclooctadecadien handelt.

8. Flammschutzmittel-Kombination nach einem oder mehreren der Ansprüche 1 bis 7, **dadurch gekennzeichnet, dass** sie als weitere Komponente C eine Stickstoff-, Phosphor- oder Phosphorstickstoffverbindung enthält.

9. Flammschutzmittel-Kombination nach Anspruch 8, **dadurch gekennzeichnet, dass** es sich bei der Komponente C um Melaminphosphat, Dimelaminphosphat, Melaminpyrophosphat, Melaminpolyphosphate, Melampolyphosphate, Melempolyphosphate und/oder Melonpolyphosphate handelt.

10. Flammschutzmittel-Kombination nach Anspruch 8, **dadurch gekennzeichnet, dass** es sich bei der Komponente C um Melaminkondensationsprodukte wie Melam, Melem und/oder Melon handelt.

11. Flammschutzmittel-Kombination nach einem oder mehreren der Ansprüche 1 bis 8, **dadurch gekennzeichnet, dass** es sich bei der Komponente C um Stickstoffverbindungen der Formeln (III) bis (VIII) oder Gemische davon handelt, 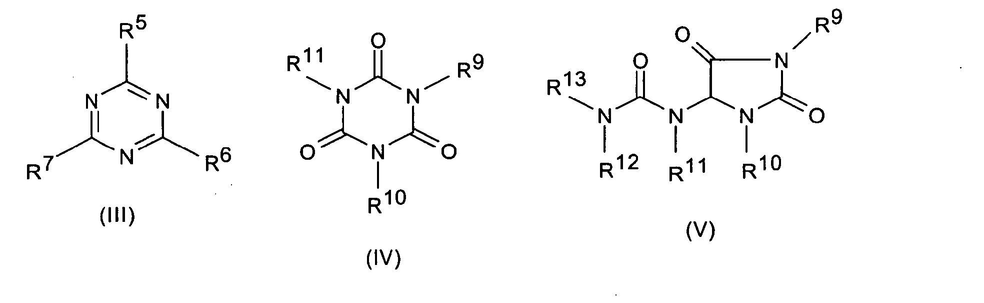 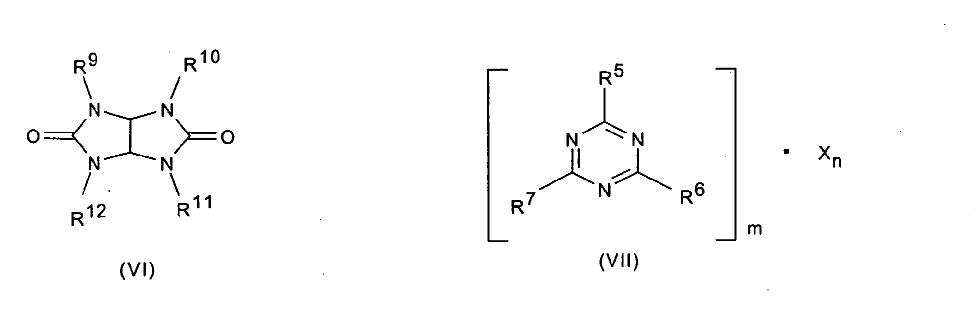 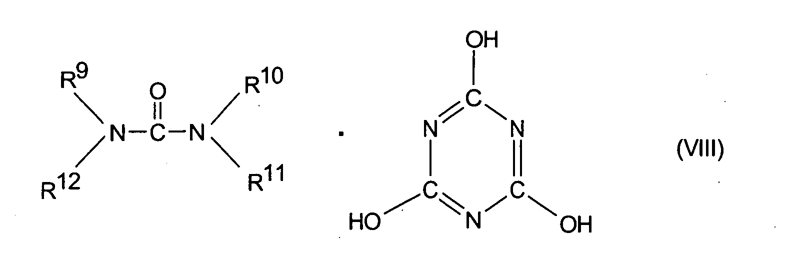 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und - N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten.

12. Flammschutzmittel-Kombination nach Anspruch 8, **dadurch gekennzeichnet, dass** es sich bei der Komponente C um oligomere Ester des Tris(hydroxyethyl)-isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide handelt.

13. Flammschutzmittel-Kombination nach Anspruch 8, **dadurch gekennzeichnet, dass** es sich bei der Komponente C um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

14. Flammschutzmittel-Kombination nach einem oder mehreren der Ansprüche 1 bis 13, **dadurch gekennzeichnet, dass** sie als Komponente D eine synthetische anorganische Verbindung und/oder ein mineralisches Produkt enthält.

15. Flammschutzmittel-Kombination nach Anspruch 14, **dadurch gekennzeichnet, dass** es sich bei der Komponente D um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen handelt.

16. Flammschutzmittel-Kombination nach Anspruch 15, **dadurch gekennzeichnet, dass** sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat handelt.

17. Flammschutzmittel-Kombination nach einem oder mehreren der Ansprüche 1 bis 16, **dadurch gekennzeichnet, dass** sie 0,1 bis 99,9 Gew.-% Komponente A und 0,1 bis 99,9 Gew.-% Komponente B enthält.

18. Flammschutzmittel-Kombination nach einem oder mehreren der Ansprüche 1 bis 17, **dadurch gekennzeichnet, dass** sie 10 bis 70 Gew.-% Komponente A, 10 bis 70 Gew.-% Komponente B und 0 bis 60 Gew.-% Komponente C enthält.

19. Flammschutzmittel-Kombination nach einem oder mehreren der Ansprüche 1 bis 18, **dadurch gekennzeichnet, dass** sie 20 bis 65 Gew.-% Komponente A, 15 bis 65 Gew.-% Komponente B, 0 bis 60 Gew.-% Komponente C und 0 bis 20 Gew.-%. Komponente D enthält.

20. Flammschutzmittel-Kombination nach einem oder mehreren der Ansprüche 1 bis 19, **dadurch gekennzeichnet, dass** sie 30 bis 60 Gew.-% Komponente A, 30 bis 50 Gew.-% Komponente B, 0 bis 50 Gew.-% Komponente C und 0 bis 5 Gew.-% Komponente D enthält.

21. Flammschutzmittel-Kombination nach einem oder mehreren der Ansprüche 1 bis 20, **dadurch gekennzeichnet, dass** sie 30 bis 60 Gew.-% Komponente A, 30 bis 50 Gew.-% Komponente B, 0 bis 40 Gew.-% Komponente C und 0 bis 2 Gew.-% Komponente D enthält.

22. Verwendung einer Flammschutzmittel-Kombination gemäß einem oder mehreren der Ansprüche 1 bis 21 zur flammfesten Ausrüstung von thermoplastischen Polymeren.

23. Verwendung nach Anspruch 22, **dadurch gekennzeichnet, dass** es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) handelt.

24. Verwendung einer Flammschutzmittel-Kombination gemäß Anspruch 22 oder 23, **dadurch gekennzeichnet, dass** unabhängig voneinander die Komponente A in einer Konzentration von 0,1 bis 50 Gew.-%, die Komponente B in einer Konzentration von 0,1 bis 30 Gew.-%, die Komponente C in einer Konzentration von 0 bis 5 Gew.-% und die Komponente D in einer Konzentration von 0 bis 30 Gew.-%, jeweils bezogen auf die Kunststoff-Formmasse, eingesetzt wird.

25. Verwendung einer Flammschutzmittel-Kombination gemäß einem oder mehreren der Ansprüche 22 bis 24, **dadurch gekennzeichnet, dass** unabhängig voneinander die Komponente A in einer Konzentration von 3 bis 40 Gew.-%, die Komponente B in einer Konzentration von 1 bis 25 Gew.-%, die Komponente C in einer Konzentration von 3 bis 20 Gew.-% und die Komponente D in einer Konzentration von 0 bis 5 Gew.-%, jeweils bezogen auf die Kunststoff-Formmasse, eingesetzt wird.

26. Verwendung einer Flammschutzmittel-Kombination gemäß einem oder mehreren der Ansprüche 22 bis 24, **dadurch gekennzeichnet, dass** unabhängig voneinander die Komponente A in einer Konzentration von 5 bis 30 Gew.-%, die Komponente B in einer Konzentration von 2 bis 15 Gew.-%, die Komponente C in einer Konzentration von 4 bis 15 Gew.-% und die Komponente D in einer Konzentration von 0 bis 2 Gew.-%, jeweils bezogen auf die Kunststoff-Formmasse, eingesetzt wird.
